# EUROPEAN PATENT APPLICATION

(11) **EP 2 853 625 A1**
(43) Date of publication of application: **01.04.2015**
(21) Application number: 12877184.7
(22) Date of filing: 27.12.2012
(51) Int. Cl.: D02G 3/36, D06M 15/19, B32B 27/12, E04F 15/00

(54) **LINT-PREVENTING YARN AND WOVEN FLOOR DECORATION MATERIAL USING SAME**

(30) Priority: 21.05.2012 KR 20120053653
(71) Applicant: LG Hausys, Ltd., Seoul 150-721 (KR)
(72) Inventor: BYUN, Hae Bong, Cheongju-si Chungcheongbuk-do 361-300 (KR); PARK, Sang Sun, Cheongju-si Chungcheongbuk-do 361-300 (KR); KO, Hae Seung, Cheongju-si Chungcheongbuk-do 361-300 (KR)
(74) Representative: Finnie, Peter John
(86) International application number: PCT/KR2012/011587
(87) International publication number: WO 2013/176368

(57) **Abstract**

Disclosed are a lint-preventing yarn, which can fundamentally prevent lint formation unlike existing yarns, and a woven floor decoration material using same. The lint-preventing yarn according to the present invention includes a core layer and a coating layer coated onto the surface of the core layer. The core layer is formed of a plurality of binder-treated fabrics or mono fabrics having a diameter of between 0.1 mm and 5 mm. The woven floor decoration material manufactured using same can be free of lint formation when cut into the shape of a tile having a predetermined size or despite friction caused by prolonged use.

## Description

### [Technical Field]

The present invention relates to a woven decorative flooring material, and more particularly, to a woven decorative flooring material which suppresses lint generated on a fabric-containing decorative material.

### [Background Art]

Flooring materials using petroleum resins such as polyvinyl chloride (PVC) and the like are widely used in various building structures such as houses, mansions, apartments, offices, shops, and the like.

Flooring materials are prepared through extrusion or calendering of a resin, such as polyvinyl chloride (PVC) and the like.

With increasing requests for production of higher-class interior materials and the like, products using natural-looking fabrics are increasing.

Yarns used for such fabrics include a large number of fiber strands. When the fabrics are cut into a tile shape having a certain size or subjected to repetitive friction caused by walking during use as a flooring material, there is a problem of lint generation on a cut surface and a surface layer thereof.

Therefore, there is an increasing need for a woven decorative flooring material minimizing lint generation.

### [Disclosure]

### [Technical Problem]

The present invention has been conceived to solve such problems in the related art, and it is an aspect of the present invention to provide yarns capable of fundamentally preventing lint generation when cut into a tile shape having a certain size or when subjected to friction due to long-term use thereof, and a woven decorative flooring material using the yarns.

### [Technical Solution]

In accordance with one aspect of the present invention, lint-preventing yarns include a core layer and a coating layer coated onto a surface of the core layer, wherein the core layer is composed of a plurality of fibers subjected to binder treatment.

In accordance with another aspect of the present invention, lint-preventing yarns include a core layer and a coating layer coated onto a surface of the core layer, wherein the core layer is composed of a mono fiber having a diameter from 0.1 mm to 5 mm.

In accordance with a further aspect of the present invention, a woven decorative flooring material includes: a lint-preventing fabric sheet including woven fabrics composed of lint-preventing yarns; a coating layer formed on an upper side of the fabric sheet; and a backing layer formed on a lower side of the fabric sheet.

### [Advantageous Effects]

The lint-preventing yarns according to the present invention fundamentally prevent lint generation unlike existing yarns.

In addition, the woven decorative flooring material formed of the yarns does not suffer from lint when cut into a tile shape having a certain size or even when subjected to friction due to long-term use thereof.

### [Description of Drawings]

Fig. 1 is a sectional view showing a structure of lint-preventing yarns according to one embodiment of the present invention.
Fig. 2 is a sectional view showing a structure of lint-preventing yarns according to another embodiment of the present invention.
Fig. 3 is a sectional view showing a structure of a woven decorative flooring material according to one embodiment of the present invention.
Fig. 4 is a sectional view showing a structure of a woven decorative flooring material according to another embodiment of the present invention.

### [Best Mode]

The above and other aspects, features, and advantages of the present invention will become apparent from the detailed description of the following embodiments in conjunction with the accompanying drawings. However, it should be understood that the present invention is not limited to the following embodiments and may be embodied in different ways, and that the embodiments are provided for complete disclosure and thorough understanding of the invention by those skilled in the art. The scope of the invention should be defined only by the accompanying claims and equivalents thereof. Like components will be denoted by like reference numerals throughout the specification.

Hereinafter, lint-preventing yarns and a woven decorative flooring material using the yarns according to the present invention will be described in detail with reference to the accompanying drawings.

### Lint-preventing yarns

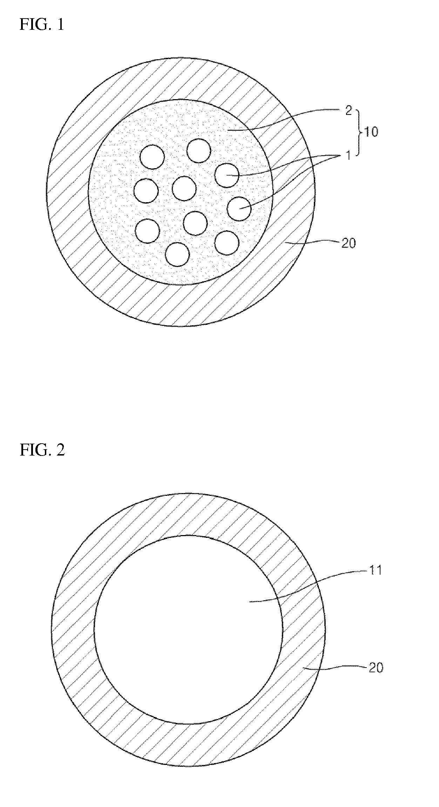

Fig. 1 is a sectional view showing a structure of lint-preventing yarns according to the present invention. Referring to Fig. 1, the lint-preventing yarns according to the present invention include a core layer 10 and a coating layer 2 formed on a surface of the core layer 10, wherein the core layer 1 is composed of a plurality of fibers 1 subjected to binder treatment.

The lint-preventing yarns according to the present invention are used for any fabric type decorative materials such as flooring materials, wall materials and the like, preferably for woven fabric decorative flooring materials.

Fiber yarns used in existing woven type decorative flooring materials have a form in which a core layer composed of a large number of fibers is present and a surface of the core layer is coated with a polymer resin or the like. When a woven type decorative flooring material is manufactured using the yarns and then cut into a tile shape, multiple fibers are exposed on a cut surface. As friction is applied to the cut surface, lint is generated. Lint is not good in an aesthetic point of view and the decorative flooring material having lint cannot be used as a decorative material.

The lint-preventing yarns according to the present invention include the plural fibers 1 subjected to binder treatment so as not to suffer from lint generation on the cut surface unlike existing yarns having lint.

That is, referring to Fig. 1, the plural fibers 1 and a binder resin 2 binding the plural fibers 1 form the core layer 10.

Here, binder treatment refers to treatment for preventing lint generation due to unbound fibers by binding the plural fibers 1.

Binder treatment may be performed by dipping the plural fibers into a binder resin or by spraying the binder resin onto the plural fibers, without being limited thereto.

The binder resin may be any resin capable of binding the plural fibers without limitation. Preferably, the binder resin is a resin including at least one of acrylic, methacrylic, polyisoprene, vinyl, epoxy, urethane, and cellulose resins. Examples of the acrylic resin include butyl acrylate, ethylhexyl acrylate, and the like. Examples of the methacrylic resin include propylene glycol dimethacrylate, tetrahydrofurfuryl methacrylate, and the like. Examples of the vinyl resin include vinyl acetate, N-vinylpyrrolidone, and the like. Examples of the epoxy resin include cycloaliphatic epoxides, and the like. Examples of the urethane resin include urethane acrylate, and the like. Examples of the cellulose resin include cellulose nitrate, and the like.

According to the present invention, the plural fibers 1 may include natural fibers or synthetic fibers. Here, the natural fibers may include at least one of cotton, silk, ramie, and jute. In addition, the synthetic fibers may include at least one of polyvinyl chloride (PVC), polyethylene (PE), polypropylene (PP), polyesters, PET fibers, glass fibers, and nylon.

Preferably, the plural fibers include at least one of PET fibers, glass fibers and nylon, thereby suppressing lint generation after binder treatment.

According to the present invention, the lint-preventing yarns include the coating layer 20 formed to wrap the surface of the core layer 10. The coating layer 20 serves to protect the surface of the yarns. The coating layer 20 may be formed of a material including at least one of polyvinyl chloride (PVC), low density polyethylene (LDPE), polypropylene (PP), polyurethane (PU) and thermoplastic polyurethane (TPU) in terms of durability for protecting the surface of the yarns.

Fig. 2 is a sectional view of lint-preventing yarns according to another embodiment of the present invention. Referring to Fig. 2, the lint-preventing yarns according to another embodiment of the present invention include a core layer 11 and a coating layer 20 coated onto a surface of the core layer 11, wherein the core layer 11 is composed of a mono fiber having a diameter from 0.1 mm to 5 mm.

As described above, the woven type decorative flooring material using the existing yarns suffers from lint, and thus has a problem of not serving as a decorative material any more. On the other hand, the lint-preventing yarns according to the present invention have an advantage of not suffering from lint due to use of the mono fiber as the core layer.

The mono fiber has a diameter from 0.1 mm to 5 mm. If the diameter of the mono fiber is less than 0.1 mm, there is a problem in that the lint-preventing yarns can be easily worn and exhibit insufficient durability, and if the diameter of the mono fiber is greater than 5 mm, production costs of the lint-preventing yarns can be increased without sufficient improvement in durability thereof.

The mono fiber may include natural fibers or synthetic fibers. Here, the natural fiber may include at least one of cotton, silk, ramie, and jute. In addition, the synthetic fiber may include at least one of polyvinyl chloride (PVC), polyethylene (PE), polypropylene (PP), polyesters, PET fibers, glass fibers, and nylon.

Preferably, the mono fiber includes at least one of PET fibers, glass fibers and nylon, thereby suppressing lint generation after binder treatment.

In addition, the mono fiber may be a hollow fiber. Here, the hollow fiber refers to a fiber which has a hollow section corresponding to a shape having an empty space or pores therein. The hollow fiber may be prepared from polyester or polyamide fibers having a hollow structure therein, without being limited thereto.

That is, according to the present invention, the core layer is a hollow fiber having an empty space therein, thereby suppressing lint generation as much as possible, as compared with the existing yarns.

Further, the hollow fiber may have a hollowness of 30% or more in terms of suppression of lint generation. Preferably, the hollow fiber has a hollowness of 30% to 40%. If the hollowness is less than 30%, there is a problem of insignificant suppression of lint generation, and if the hollowness is greater than 40%, production costs are overly increased as compared with suppression of lint generation.

The lint-preventing yarns according to another embodiment of the present invention have the coating layer 20 on the surface of the core layer 11, and the coating layer 20 may be formed of a material including at least one of polyvinyl chloride (PVC), low density polyethylene (LDPE), polypropylene (PP), polyurethane (PU) and thermoplastic polyurethane (TPU) in terms of durability for protecting the surface of the yarns.

Hereinafter, a woven decorative flooring material using the lint-preventing yarns described above will be described in detail.

### Woven decorative flooring material using lint-preventing yarns

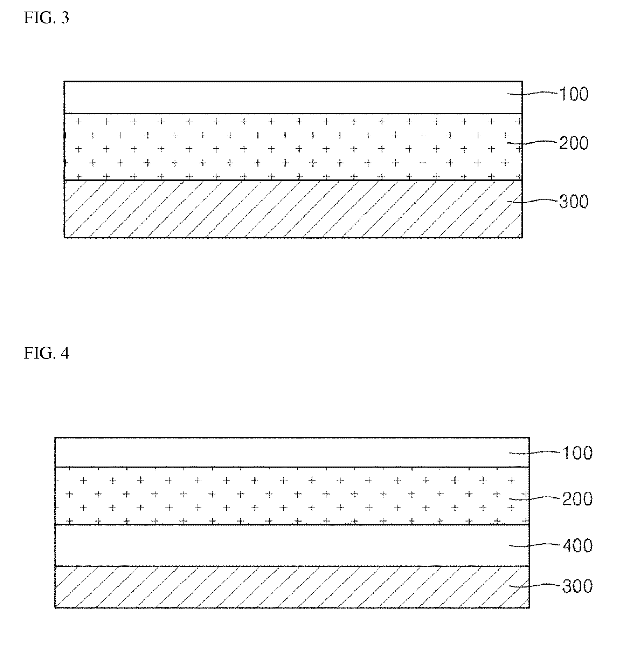

Fig. 3 is a sectional view showing a structure of a woven decorative flooring material according to one embodiment of the invention. Referring to Fig. 3, the woven decorative flooring material according to this embodiment includes a lint-preventing fabric sheet 200 including woven fabrics composed of the yarns according to claim 1 or 2, a coating layer 100 formed on an upper side of the fabric sheet 200, and a backing layer 300 formed on a lower side of the fabric sheet 200.

In addition, the woven decorative flooring material according to the present invention may further include a dimension stabilizing layer 400 formed between the fabric sheet 200 and the backing layer 300.

As used herein, terms such as "upper side" and "lower side" are defined with reference to the accompanying drawings for convenience, and are not to be construed in any way as limiting the present invention.

First, according to the present invention, the fabric sheet 200 of the woven decorative flooring material includes the woven fabrics composed of the yarns described above. Here, the fabrics may be woven using a general weaving machine, or a Jacquard weaving machine. The fabrics may be selectively woven in a plain weave, twill weave, or the like, as needed.

In addition, for a variety of appearances of the fabrics, the fabrics may be woven from yarns having at least two different colors, and patterns may be formed on a surface thereof through dyeing or printing, as needed.

Next, the coating layer 100 is formed on the upper side of the fabric sheet. The coating layer is formed on the fabric sheet 200 for the purpose of improvement of surface properties of the flooring material including scratch resistance, abrasion resistance and the like, facilitation of cleaning through improvement of anti-contamination, and the like. The coating layer may be formed of a material including at least one of polyurethane, urethane, and acrylic resins.

Next, the backing layer 300 is formed on the lower side of the fabric sheet 200. According to the present invention, the backing layer 300 is the most fundamental layer of the decorative flooring material. In addition, the backing layer 300 serves to support the fabric sheet 200 and to absorb impact from upper and lower sides thereof, and provides capabilities such as thermal insulation, mounting convenience, cushioning, sound absorption, soundproofing, and the like. The backing layer 300 may be formed as a foamed or non-foamed layer in a single layer or in two or more layers.

The backing layer 300 may be prepared from at least one of PVC, TPU, and LDPE resins.

In addition, the backing layer 300 may include a polylactic acid (PLA) resin, and may further include a non-phthalate plasticizer and an acrylic copolymer as a melt strength reinforcing agent in addition to the PLA resin. More specifically, the backing layer may further include at least one of: 100 parts by weight of a PLA resin; 5 parts by weight to 60 parts by weight of a non-phthalate plasticizer; 0.1 parts by weight to 20 parts by weight of an acrylic copolymer as a melt strength reinforcing agent; 0.01 parts by weight to 10 parts by weight of a lubricant; 10 parts by weight or less of an anti-hydrolysis agent; 1000 parts by weight or less of calcium carbonate (CaCO₃); and 50 parts by weight or less of titanium dioxide (TiO₂).

The backing layer 300 may have a thickness from 0.2 mm to 5.0 mm. If the thickness of the backing layer is less than 0.2 mm, there is a problem of difficult molding, and if the thickness of the backing layer is greater than 5.0 mm, there is a problem of rise in production costs.

Further, the woven decorative flooring material according to the present invention may further include the dimension stabilizing layer 400 formed between the fabric sheet 200 and the backing layer 300. The dimension stabilizing layer 400 serves to supplement dimensional stability of the decorative flooring material, and may be formed by impregnating glass fibers (G/Fs) into at least one of acrylic, melamine, and PLA resins exhibiting excellent moldability.

The flooring material using a PLA resin can suffer from phenomena such as dimensional change due to temperature change caused by heating and the like, gap generation between connected flooring materials due to shrinkage caused by dimensional change, and the like. The dimension stabilizing layer 400 secures dimensional stability and thus prevents the above phenomena.

Here, the glass fibers may have a mass per unit area from 30 g/m² to 150 g/m². If the mass per unit area of the glass fibers is less than 30 g/m², the glass fibers can provide insufficient reinforcement of dimensional stability, and if the mass per unit area of the glass fibers is greater than 150 g/m², there can be a problem of deterioration in adhesion between the fabric sheet 200 and the dimension stabilizing layer 400 or between the dimension stabilizing layer 400 and the backing layer 300.

The dimension stabilizing layer 400 may further include a non-phthalate plasticizer such ATBC and the like, a viscosity decreasing agent, calcium carbonate, which is an inorganic filler for cost reduction, titanium dioxide (TiO₂) as a white pigment, and the like in addition to the resins such as acrylic resins and the like, depending upon purposes and shapes. These may be used alone or in combination thereof.

The dimension stabilizing layer 400 may have a thickness from 0.1 mm to 1.0 mm. If the thickness of the dimension stabilizing layer 400 is less than 0.1 mm, the dimension stabilizing layer can provide insufficient dimensional stability, and if the thickness of the dimension stabilizing layer 400 is greater than 1.0 mm, the dimension stabilizing layer has a thicker thickness without further dimensional stability and thus causes rise in overall production costs of the flooring material.

Next, a process of manufacturing the decorative flooring material according to the present invention, which includes the components as described above, will be described hereinafter.

First, lint-preventing yarns according to the present invention are prepared, followed by forming a fabric sheet using woven fabrics composed of the yarns.

When the lint-preventing yarns according to the present invention are prepared using a plurality of fibers, the yarns are prepared by dipping the plural fibers into a binder resin to perform binder treatment, followed by formation of a coating layer. Alternatively, when the lint-preventing yarns according to the present invention are prepared using a mono fiber, the yarns are prepared by forming a coating layer on the mono fiber having a diameter from 0.1 mm to 5 mm.

The lint-preventing yarns prepared through the above process are woven into fabrics, followed by manufacturing the fabrics into a fabric sheet.

Next, a backing layer is prepared through calendering, and then stacked on a lower side of the fabric sheet. The backing layer may be prepared from PLA resins and the like.

Next, to impart properties such as anti-contamination, scratch resistance, abrasion resistance and the like to the fabric sheet, a coating layer is formed on an uppermost side of the fabric sheet, thereby preparing a decorative flooring material. The coating layer may be composed of acrylic resins and the like, and may be formed by UV curing.

As described above, the decorative flooring material according to the present invention may further include a dimension stabilizing layer between the fabric sheet and the backing layer. Therefore, the dimension stabilizing layer may be prepared before the backing layer and the fabric sheet are stacked, thereby producing a stacked body including the fabric sheet, the dimension stabilizing layer and the backing layer in order from top to bottom.

Hereinafter, the present invention will be described in more detail with reference to some examples. It should be understood that these examples are not to be construed in any way as limiting the present invention.

### [Example 1]

Poly fiber yarns made of a plurality of PET fibers were dipped into an acrylic resin for binder treatment. As such, the poly fiber yarns, in which the plural fibers were bound, were dipped into a PVC resin to perform coating, thereby preparing lint-preventing yarns. Next, a fabric sheet was produced by weaving the yarns.

Next, a backing layer was prepared from a PLA resin including a non-phthalate plasticizer and an acrylic copolymer as a melt strength reinforcing agent. Next, the backing layer and the fabric sheet were stacked using an oven and a roll for lamination.

Next, a UV curable acrylate resin was coated onto an upper side of the fabric sheet, followed by curing, thereby forming a coating layer.

Through the above process, a woven decorative flooring material was manufactured.

### [Example 2]

A decorative flooring material was manufactured in the same manner as in Example 1 except that yarns prepared from a mono fiber having a diameter from 0.1 mm to 5 mm were used instead of the lint-preventing yarns of Example 1.

### [Example 3]

A decorative flooring material was manufactured in the same manner as in Example 2 except that the yarns were prepared using a hollow fiber made of a polyester fiber instead of the mono fiber of Example 2.

### [Example 4]

A decorative flooring material was manufactured in the same manner as in Example 1 except that a dimension stabilizing layer was further included between the fabric sheet and the backing layer.

The dimension stabilizing layer was prepared by impregnating glass fibers (G/Fs) into an acrylic resin and a PLA resin.

### [Comparative Example 1]

A decorative flooring material was manufactured in the same manner as in Example 1 except that yarns not subjected to binder treatment were used instead of the yarns of Example 1.

### [Comparative Example 2]

A decorative flooring material was manufactured in the same manner as in Example 1 except that yarns not subjected to binder treatment were used instead of the yarns of Example 1.

### [Evaluation of lint generation]

Each of the woven decorative flooring materials prepared in Examples and Comparative Examples was cut to a certain size. Next, friction was applied to the cut surface at constant force.

It could be observed that the decorative flooring materials of Comparative Examples suffered from severe lint due to unbinding of fiber yarns on the cut surface. Conversely, it could be confirmed that the decorative flooring materials of Examples suffered from almost no lint.

Although the present invention has been described with reference to some embodiments, it should be understood that the foregoing embodiments are provided for illustrative purposes only, and that various modifications, changes, alterations, and equivalent embodiments can be made by those skilled in the art without departing from the spirit and scope of the invention. Therefore, the scope of the invention should be limited only by the accompanying claims and equivalents thereof.

## Claims

1. Lint-preventing yarns comprising:
a core layer; and
a coating layer formed on a surface of the core layer,
wherein the coating layer is composed of a plurality of fibers subjected to binder treatment.

2. Lint-preventing yarns comprising:
a core layer; and
a coating layer formed on a surface of the core layer,
wherein the coating layer is composed of a mono fiber having a diameter from 0.1 mm to 5 mm.

3. The lint-preventing yarns according to claim 2, wherein the mono fiber is a hollow fiber.

4. The lint-preventing yarns according to claim 1, wherein the plural fibers are dipped into a binder resin comprising at least one of acrylic, methacrylic, polyisoprene, vinyl, epoxy, urethane, and cellulose resins to perform binder treatment.

5. The lint-preventing yarns according to claim 1 or 2, wherein the fiber is composed of at least one of PET fibers, glass fibers, and nylon.

6. The lint-preventing yarns according to claim 1 or 2, wherein the coating layer is formed of a material comprising at least one of polyvinyl chloride (PVC), low density polyethylene (LDPE), polypropylene (PP), polyurethane (PU), and thermoplastic polyurethane (TPU)

7. A woven decorative flooring material comprising:
a lint-preventing fabric sheet comprising woven fabrics composed of the lint-preventing yarns according to claim 1;
a coating layer formed on an upper side of the fabric sheet; and
a backing layer formed on a lower side of the fabric sheet.

8. A woven decorative flooring material comprising:
a lint-preventing fabric sheet comprising woven fabrics composed of the lint-preventing yarns according to claim 2;
a coating layer formed on an upper side of the fabric sheet; and
a backing layer formed on a lower side of the fabric sheet.

9. The decorative flooring material according to claim 7 or 8, further comprising: a dimension stabilizing layer formed between the fabric sheet and the backing layer.

10. The decorative flooring material according to claim 7 or 8, wherein the coating layer comprises at least one of urethane and acrylic resins.

11. The decorative flooring material according to claim 9, wherein the dimension stabilizing layer is formed by impregnating glass fibers (G/Fs) into at least one of acrylic, melamine, and PLA resins.
